# EUROPEAN PATENT SPECIFICATION

(11) **EP 2 955 262 B1**
(45) Date of publication and mention of the grant of the patent: **25.01.2017**
(21) Application number: 15171170.2
(22) Date of filing: 09.06.2015
(51) Int. Cl.: D06F 37/20, F16F 7/14

(54) **WASHING MACHINE**
WASCHMASCHINE
MACHINE À LAVER

(30) Priority: 10.06.2014 IT TV20140079
(43) Date of publication of application: 16.12.2015
(73) Proprietor: IMESA SPA, 31040 Cessalto (TV) (IT)
(72) Inventor: GALASSI, Stefano, 33070 Fontanafredda (PN) (IT); COPPO, Enrico, 30020 Noventa di Piave (VE) (IT); FADEL, Fabio, 30020 Fossalta di Piave (VE) (IT)
(74) Representative: Dragotti, Gianfranco

(56) References cited:
- EP-A1- 1 122 458
- WO-A1-94/04843
- WO-A1-96/02770
- FR-A- 1 369 294

## Description

The present invention relates to a washing machine, and more particularly to a suspension system for the washing unit of a washing machine.

The washing machines of the known type comprise essentially: a frame, a washing unit, a suspension system for the washing unit and a drive unit (see, for example, WO 94/04843).

The frame is usually rigid and adapted to support the load of the suspension system, the drive unit, the washing unit and the load to be washed which is placed inside the washing unit.

The washing unit comprises a washing tub and a rotating drum, the latter being moved in a known manner by the drive unit. The washing unit is connected to the frame by means of the suspension system which generally comprises springs and shock absorbers. The suspension system of the washing unit has the function of damping the vibrations due to the imbalance of the load inside the drum during its rotation.

It is known in fact that when the centre of gravity of a rotor does not coincide with the axis of rotation a significant degree of vibration may be generated, sometimes such as to adversely affect operation of the machine, should conditions close to a particular speed of rotation, referred to as "critical speed", be reached. This problem is also known as static imbalance.

There is also another type of imbalance, i.e. dynamic imbalance, which occurs when a body possessing a certain mass rotates about of a fixed axis. In these conditions it is possible that inertia forces may arise such that they generate an inertia torque orthogonal to the axis of rotation, not equal to zero. In this case also a vibratory movement, also of a significant nature, is generated.

During the washing and centrifuging step, the load to be washed is distributed in a random manner along the periphery of the rotating drum, causing an imbalance of the drum

The imbalance of the drum, whether it be static or dynamic, during rotation at the high speeds reached in particular during centrifuging, creates a series of stresses on the washing unit which, if not dampened, may generate intense strong vibrational forces.

The vibrations, in addition to generating a bothersome noise, may be very damaging for the mechanical strength of the machine components, i.e. suspension system and frame, to which they are transmitted.

Washing-machine manufacturers have therefore paid particular attention to these issues and over the years many types of shock-absorbing systems for the washing unit, of both the passive and active type, have been developed.

In passive systems, the washing unit may for example be suspended from the top by means of springs and supported on the bottom by means of shock absorbers. Also known are versions in which the washing unit is not suspended by means of springs, the latter being included in the shock absorbers.

The passive system absorbs the vibrations produced by the imbalance of the rotating washing unit.

This type of system acts effectively only in certain intensity ranges of the vibrating movement. Therefore, for example, during transients due for example to the rotational start-up phase or in the case of a major imbalance in the load, these systems may not be effective for damping certain vibrational frequencies.

In active systems, the washing unit is connected to the frame for example by means of actuators controlled by an electronic control unit which, via suitable sensors (known per se to the person skilled in the art), detect the degree of imbalance and adapt the response of the actuators to the real forces which act on the washing unit.

These issues are of even greater importance in the sector of industrial washing machines where the load to be washed may be very heavy, for example in the region of 150 kg.

The present invention relates in particular to this technical sector namely that of industrial washing machines, it being clear however that reference to this sector is not exclusive, but that the principles of the present invention may be applied in an equal measure also to washing machines in general, for example for domestic use.

The washing machines of the prior art, although widely used and popular, are not without drawbacks. In fact, the nature of the components which are used are such that the washing machines are easily prone to breakage and to the consequent replacement of damaged parts.

For example, the shock absorbers, which are usually of an oil-hydraulic nature, are particularly subject to wear and must be replaced after a give number of operating cycles or in any case every 3 to 4 years.

When the shock absorber no longer performs its function, to the point of breakage or simply failing to damp the vibrations of the machine, the washing unit, which is subject to the stresses described above, transmits intense vibrations to the frame and its electric and electronic components which may also be severely damaged.

Replacement of the shock absorbers is a complicated and costly operation since it is required to disassemble the washing machine and install new shock absorbers.

The object of the present invention is therefore to solve at least partially the drawbacks of the prior art.

A first task of the present invention is to provide a machine with a structure which is simpler than that of the machines of the prior art.

A second task of the present invention is to provide a machine which is less prone to wear of its mechanical parts than the machines of the prior art. In particular, the aim is to provide a washing machine which does not require continuous maintenance and continuous replacement of parts of the suspension system or the frame.

Moreover, the aim is to provide a machine which is more stable than the machines of the prior art, i.e. which does not allow a lot of movement of the washing unit at low speeds of rotations and which is more effective in damping the vibrations at high speeds of rotation.

The object and tasks are achieved with a washing machine according to Claim 1.

Further advantageous characteristic features of the washing machine according to the present invention are contained in the dependent claims.

The characteristic features and advantages of a washing machine provided by applying the principles of the present invention will emerge more clearly from the description, hereinbelow, of a number of examples of embodiment provided with reference to the accompanying drawings, in which:
Fig. 1 shows a schematic perspective view of a washing unit and part of a frame of an industrial washing machine according to the present invention;
Fig. 2 shows a bottom plan view of the washing machine according to Figure 1;
Fig. 3 shows a top plan view of a part of the frame of a washing machine according to the present invention;
Fig. 4 shows a schematic front view of the washing machine shown in Figure 1;
Fig. 5 shows a schematic rear view of the washing machine shown in Figure 1;

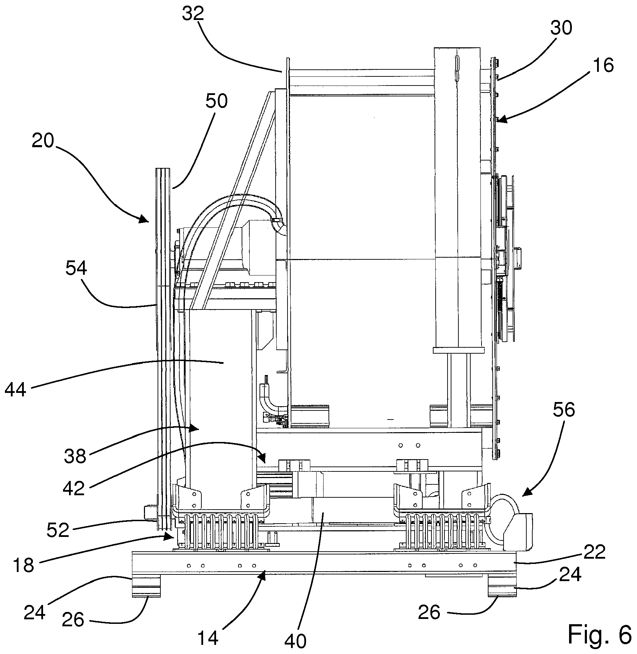

Fig. 6 shows a schematic side view of the washing machine shown in Figure 1;
Figs. 7 and 8 show two details of a washing machine according to the present invention;
Fig. 9 shows a schematic perspective view of an embodiment of the present invention;
Figs. 10 and 11 show a front view and a side view of the embodiment shown in Figure 9.

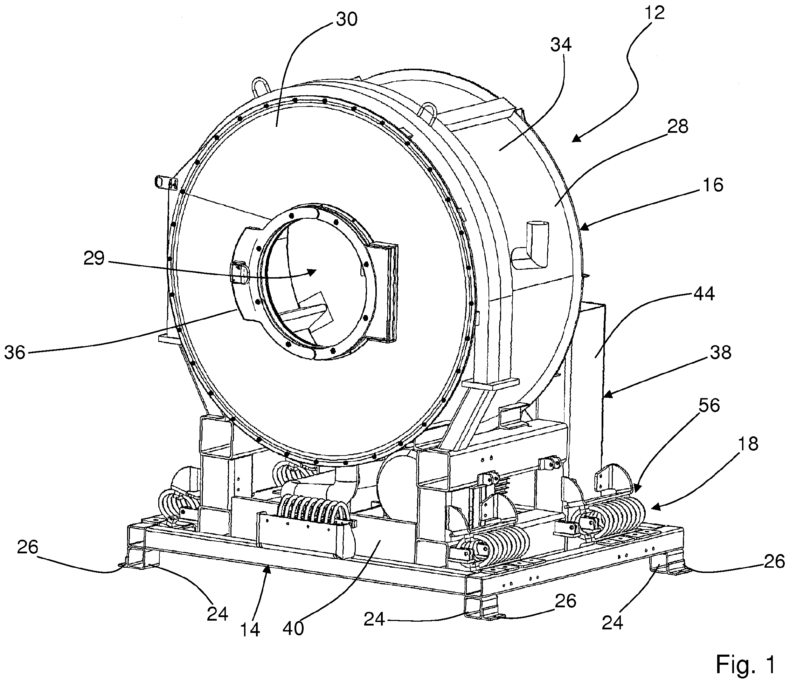

In Figure 1 the reference number 12 denotes an industrial washing machine according to the present invention.

The washing machine 12 according to the present invention comprises a frame 14, on which a washing unit 16 and a drive unit 20 are mounted by means of a suspension system 18.

The frame 14 comprises a base support 22 with a rectangular shape. Advantageously, the base support 22 may be formed by tubes with a square cross-section which are welded to each other at their ends so as to form a rectangle or a square supported at the corners of the base support by support feet 24 (for easier reference all the support feet are indicated by the reference number 24).

Each support foot 24 may be provided with an angular fixing profile 26 comprising a surface adapted to be connected to the side surface of the support foot 24, and a surface, perpendicular to the former, provided with a hole for performing fixing to the ground or onto another structure.

The frame 14 is designed to support the weight of the washing unit 16, the drive unit 20, the suspension system 18 and the weight of the laundry, the water and the detergent during washing.

The washing unit 16 may be of a type known per se to the person skilled in the art. In particular, the washing unit comprises a tub 28 and a drum 29, which have a substantially cylindrical form with the axis of the cylinder coinciding with the axis of rotation of the drum 29. The drum 29 is mounted rotatably inside the tub.

Since the drum is an element known per se to the person skilled in the art it will not be further described.

Advantageously, the axis of rotation is arranged in a direction substantially horizontal with respect to the surface on which the base support rests.

The tub 28 comprises two opposite end faces 30, 32 and a side surface 34.

A hatch 36 may be provided on a first end face 30 of the tub 28, this element being known per se in this type of machine and therefore not being further described. According to alternative embodiments, the hatch may also be provided on the side surface of the tub, for example directed upwards.

Washing unit and drive unit are provided on a support structure 38.

The support structure 38 comprises a base 40 on which the tub 28 and a motor 42 forming part of the drive unit 20 are fixed in a known manner.

Advantageously, a vertical structure 44, rigidly connected to the base 40, may also be provided.

In accordance with a possible embodiment of the present invention, the vertical structure 44 is provided on the opposite side to the first end face 30 on which the hatch 36 is provided.

In accordance with a possible embodiment of the present invention, a connection between drum 29 and drive unit 20 is provided in the region of the second end face, indicated by the reference number 32 in the attached figures, and the vertical structure 44.

In particular, a shaft 46, connected in a manner known per se to the drum 29, projects through the tub 28 and may rest on a seat provided on the vertical structure 44.

In a manner known per se to the person skilled in the art, a radial bearing may be provided between seat and shaft 46 of the motor 42.

The shaft 46 receives the movement for rotation about its axis from the motor 42. Preferably movement transmission means 48 are provided between shaft 46 and motor 42.

In accordance with a possible embodiment of the present invention, the movement transmission means 48 comprise a first pulley 50 keyed onto the shaft 46, a second pulley 52 of the motor 42 and a belt 54 which engages with the pulleys 50, 52.

In accordance with a possible alternative embodiment of the present invention, the motor 42 may be connected directly to the drum without the need to provide the movement transmission means 48 described above.

The suspension system denoted overall by the reference number 18 is provided between the support structure 38 and the frame 14.

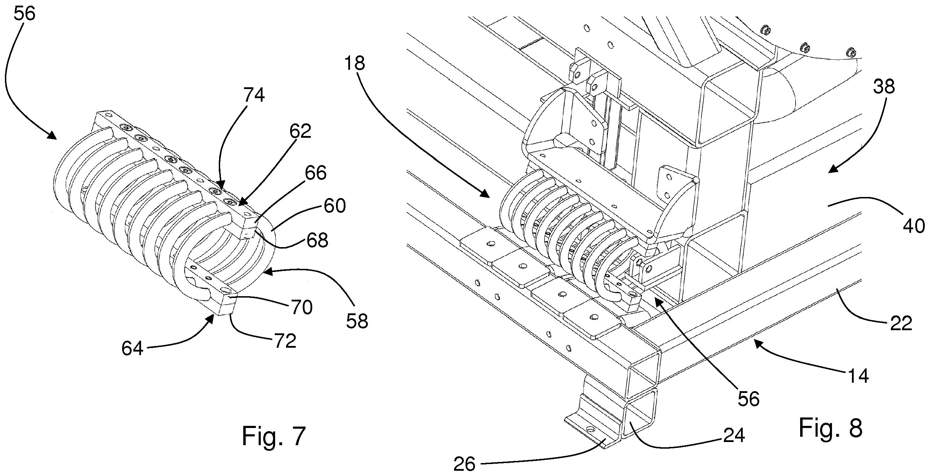

The suspension system 18 comprises metal-cable shock absorbers, denoted generically by the reference number 56. The metal-cable shock absorbers are shown in the larger scale view of Figure 7.

With reference to Figure 7, the metal-cable shock absorbers 56 comprise a shock absorber element 58 comprising at least one cable wound so as to form at least one coil 60, preferably a plurality of coaxial coils 60, and mounting brackets 62, 64. In view of the form of the shock absorber element, the shock absorbing properties are present not only in a plane perpendicular to the axis of the coils, but also in non-perpendicular planes and also along the direction of the axis of the coils. The basic properties of this type of shock absorber, since they are known to the person skilled in the art, will not be described further.

The shock absorber element 58 may be formed by a single cable wound in a spiral in which the coils 60 are locked in position by means of the mounting brackets 62, 64.

In accordance with an alternative embodiment of the present invention, the shock absorber element 58 may be obtained using sections of cable. For example, a cable section may be wound so as to form a coil 60 or a group of coils 60.

The cable may be formed by strands in turn formed by wires.

Advantageously, the cable may have a thickness of between 10 and 20 mm. Moreover, it may have a diameter of the coils ranging between 50 and 150 mm

In accordance with a possible embodiment of the present invention, the number of coils for each shock absorber element 58 may range between 4 and 10.

According to a possible embodiment of the present invention, the material from which the cable is made consists of steel. Advantageously, the cable may be galvanized with a metal core.

Each mounting bracket 62, 64 may comprise two parts 66, 68 and 70, 72 facing each other. Moreover, each part 66, 68 and 70, 72 may comprise seats having substantially the shape of a semi-circle.

Each pair of parts 66, 68 and 70, 72 is fixed, for example by means of fixing screws 74, so that the cable is locked in position.

In accordance with a possible embodiment of the present invention, the mounting brackets 62, 64 are provided at diametrically opposite points.

The mounting brackets 62, 64 are used to fix the cable shock absorber to the frame 14 and to the support structure 38. Advantageously, the cable shock absorber is fixed to the base and the base support 22.

In accordance with a first embodiment of the present invention, at least one metal-cable shock absorber, per side, is provided between the base support 22 and base 40, along their portions parallel to the axis of rotation of the drum.

Advantageously, two metal-cable shock absorbers, per side, may be provided between the base support 22 and base 40, along their portions parallel to the axis of rotation of the drum.

Moreover, at least one cable shock absorber may be provided between base support 20 and base 40 along their front portion perpendicular to the axis of rotation of the drum.

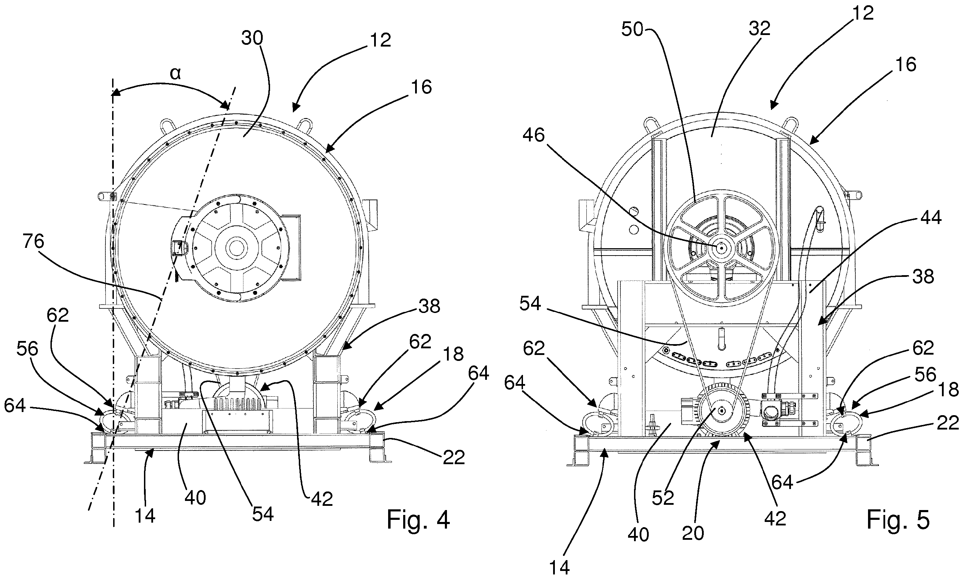

As can be seen in Figures 4 and 5, the mounting brackets 62, 64 of the shock absorbers, arranged on sides parallel to the axis of rotation of the drum, may be arranged along a direction inclined with respect to the base support. Advantageously, the brackets are provided so that the mounting bracket 64 connected to the base support 22 is in a more external position than the mounting bracket 62 connected to the base 40.

In accordance with a possible embodiment of the present invention, the plane passing through the two mounting brackets 62, 64, denoted by the reference number 76 in Figure 4, of each cable shock absorber is inclined towards the axis of rotation of the drum Advantageously, the inclination of the plane 76 passing through the two mounting brackets 62, 64 of each cable shock absorber is inclined towards the axis of rotation of the drum at an angle of between 0° and 45°, indicated by α in Figure 4.

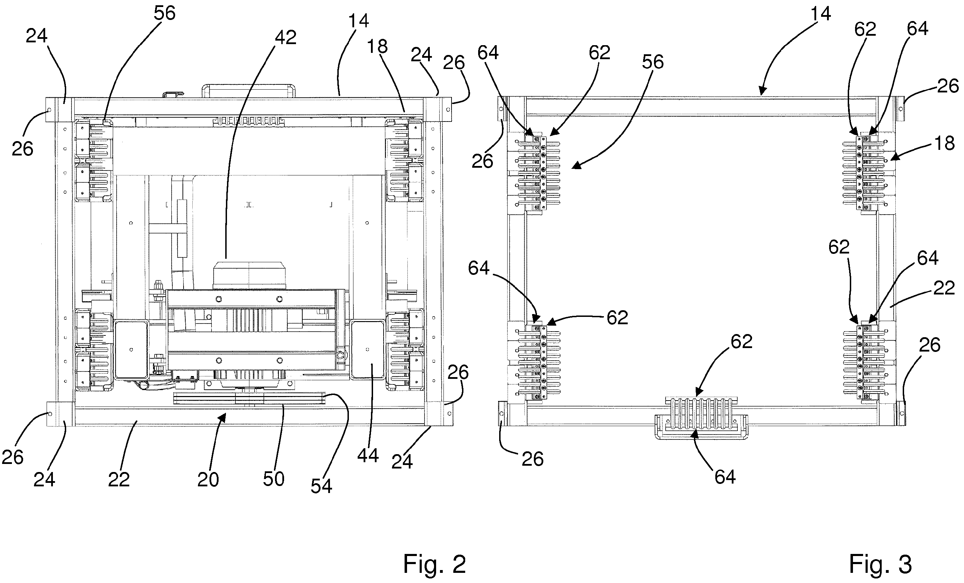

As can be clearly seen in Figure 3, the shock absorber positioned on the front side of the base support 22 may have support brackets 62, 64 arranged along a direction orthogonal to the axis of rotation of the drum.

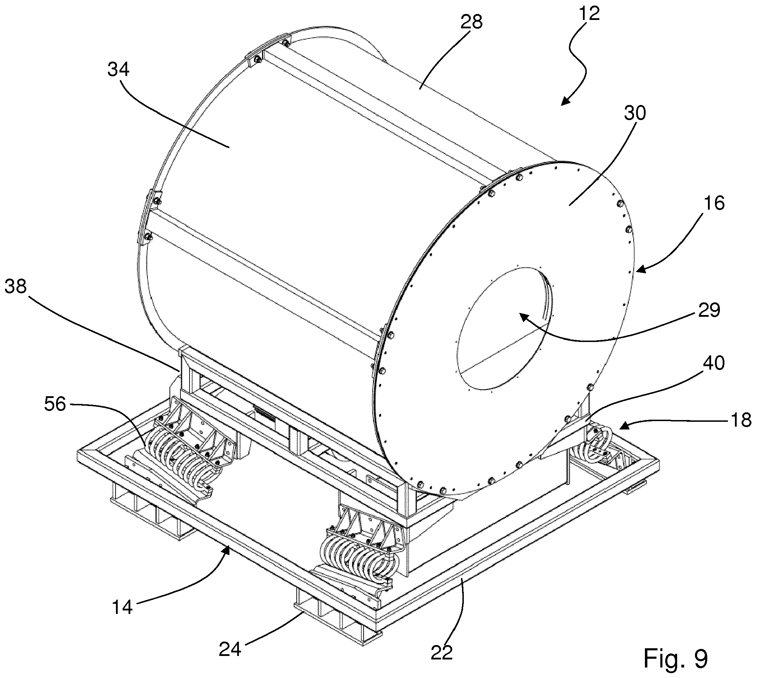

Figures 9-11 show an alternative embodiment of the present invention, which envisages four shock absorber elements 56, two for each side, between base support 22 and base 40, along their portions parallel to the axis of rotation of the drum.

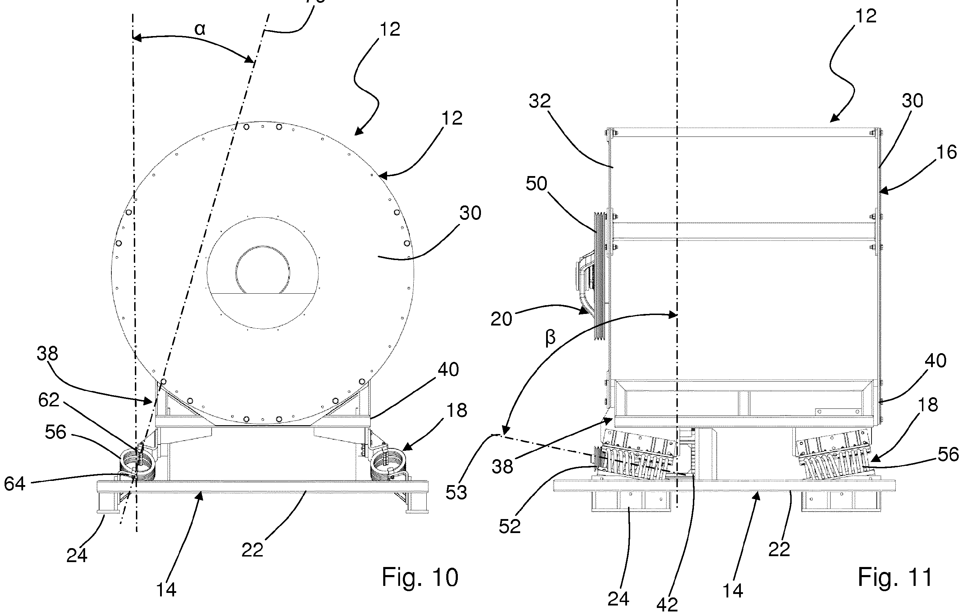

As can be clearly seen in Figures 10 and 11, the shock absorbing elements 56 may be inclined at least in two directions.

Advantageously, the inclination of the plane 76 passing through the two mounting brackets 62, 64 of each cable shock absorber may be inclined, relative to the vertical, towards the axis of rotation of the drum, at an angle of between 0° and 45°, indicated by α in Figure 10.

Moreover, the longitudinal axis 53 of each shock absorber element is inclined with respect a plane perpendicular to the axis of rotation of the drum at an angle of between 70° and 90°, indicated by β in Figure 11.

In the embodiment described above, the shock absorber element arranged in the front position may not be provided.

It has therefore been seen how the suspension system 18 described above offers numerous advantages compared to the suspension systems of the prior art.

At low speeds of rotation, unlike the current technology, which allows ample displacement of the tub due to the weight inertia of the load, detergent and water, the system according to the present invention eliminates substantially the movement, reducing the friction, sliding and wear of all the mechanical parts.

In fact the suspension system 18 according to the present invention is activated only at certain frequencies, and in particular at the washing frequencies of between 7 and 12 Hz it keeps the system rigid.

This, in addition to obvious mechanical advantages, represents also an industrially and commercially more attractive aspect compared to a machine with a tub which is subject to intense oscillation during the low-speed cycle (washing, pre-washing and rinsing).

As regards the behaviour at high speeds of rotation, as a result of the suspension system 18 according to the present invention, the potential load imbalance may be increased by up to 15% without having to interrupt the cycle and reactivate the centrifuge.

It is known in fact that, in machines of the prior art, once high-speed rotation of the drum starts and a load imbalance greater than a certain threshold occurs, the drum is slowed down, stopped and started again in an attempt to redistribute the load and limit the imbalance.

Therefore, the fact of being able to increase the permissible imbalance value results in a series of savings.

First and foremost, savings in time, since the machine is not obliged to interrupt and repeat the centrifugal sequence owing to its load, but performs centrifuging at the maximum speed (factor G equal to 350). This means less switching on and off of the motor and corresponding savings in terms of electric power and time.

Furthermore, there are also savings in the amount of water used since each centrifuging restart operation requires litres of water which must then be disposed of.

Further advantages relate to the reduction in noise since, with the suspension system 18 according to present invention, it is possible to reduce significantly (by even as much as 30%) the noise normally produced by the springs and the shock absorbers in the washing machines of the known type.

As regards maintenance and environmental impact, the current shock absorbers are of the oil-hydraulic type and have an average life of 3 to 4 years. The suspension system 18 according to the present invention has a practically infinite duration and in any case does not required the use of oils.

Moreover, the design is relatively simply since it consists of a steel cable forming coils locked between steel plates.

Moreover, it is possible to obtain a reduction in the production costs of up to about 30% less compared to the cost of the suspension systems of the prior art.

Finally, using the suspension system according to the present invention it is possible to provide a basic machine which may be subsequently assembled in two different ways:
- without suspension system (machine fixed to the ground) for example in machines with a low centrifuging speed;
- with the suspension system 18 in high-speed centrifuging machines.

This aspect results in important economies of scale since with the same number of components it is possible to obtain two machines which are very different from each other with a considerable saving in terms of warehouse costs.

The person skilled in the art, in order to satisfy specific requirements, may make modifications to the embodiments described above and/or replace the parts described with equivalent parts, without thereby departing from the scope of the accompanying claims.

For example, embodiments where the steel-cable shock absorber system is connected, for example, to shock absorber systems of the known type, such as oil-hydraulic shock absorbers or springs, are possible.

## Claims

1. Washing machine comprising a frame (14), and a washing unit (16), a drive unit (20) for said washing unit (16), which are connected to said frame by means of a suspension system (18),
**characterized in that** said suspension system (18) comprises metal-cable shock absorbers (56) comprising a shock absorber element (58) in turn comprising at least one cable wound to form at least one coil (60) and mounting brackets (62, 64).

2. Washing machine according to claim 1, **characterized by** comprising a support structure (38) comprising a base (40) on which the washing unit (16) and the drive unit (20) are arranged, said frame (14) comprising a base support, said base (40) being connected to said base support (22) by means of the suspension system (18).

3. Machine according to any one of the preceding claims, **characterized in that** the shock absorber element (58) is formed by a single cable wound in a spiral in which the coils (60) are locked in position by means of the mounting brackets (62 , 64).

4. Machine according to claim 1, **characterized in that** the cable has a thickness of between 10 and 20 mm.

5. Machine according to claim 1, **characterized in that** each mounting bracket (62, 64) comprises two parts (66, 68, 70, 72) facing each other, each part (66, 68; 70, 72) comprising seats having substantially the shape of a semi-circle for said cable, said parts being locked in position by means of screws.

6. Machine according to claim 2, **characterized in that** between the base support (22) and the base (40), along their portions parallel to the axis of rotation of the drum, at least one metal-cable shock absorber is provided for each portion.

7. Machine according to the preceding claim, **characterized in that** between the base support (22) and the base (40), along their portions parallel to the axis of rotation of the drum, two metal-cable shock absorbers are provided for each portion.

8. Machine according to either one of claims 6 or 7, **characterized in that** the mounting brackets (62, 64) of the shock absorbers arranged on the portions parallel to the axis of rotation of the drum may be arranged along a direction inclined with respect to the base support (22).

9. Machine according to claim 8, **characterized in that** the mounting bracket (64) connected to the base support (22) is in a more external position than the mounting bracket (62) connected to the base (40).

10. Machine according to claim 9, **characterized in that** a plane (76) passing through the two mounting brackets (62, 64) of each metal-cable shock absorber positioned on the side portions is inclined towards the axis of rotation of the drum.

11. Machine according to claim 10, **characterized in that** the inclination of the plane (76) passing through the two mounting brackets (62, 64) of each metal-cable shock absorber is inclined towards the axis of rotation of the drum of an angle of between 0° and 45°.

12. Machine according to any one of claims 8-11, **characterized in that** the longitudinal axis (53) of each shock absorber element is inclined relative to a plane perpendicular to the axis of rotation of the drum at an angle of between 70° and 90°.

13. Machine according to any one of claims 6-12, **characterized in that** at least one metal-cable shock absorber is arranged between the base support (22) and base (40) along their front portion perpendicular to the axis of rotation of the drum.

## Patentansprüche

1. Waschmaschine mit einem Rahmen (14), sowie einer Wascheinheit (16) und einer Antriebseinheit (20) für die Wascheinheit (16), die mittels eines Federungssystems (18) mit dem Rahmen verbunden sind,
**dadurch gekennzeichnet, dass** das Federungssystem (18) Metalldraht-Stoßdämpfer (56) aufweist, die ein Stoßdämpferelement (58) aufweisen, das wiederum zumindest einen Draht, der so gewickelt ist, dass zumindest eine Spule (60) gebildet ist, und Montagehalter (62, 64) aufweist.

2. Waschmaschine gemäß Anspruch 1, **gekennzeichnet durch** eine Stützstruktur (38), die eine Basis (40) aufweist, an der die Wascheinheit (16) und die Antriebseinheit (20) angeordnet sind, wobei der Rahmen (14) eine Basisstütze aufweist, wobei die Basis (40) mit der Basisstütze (22) mittels des Federungssystems (18) verbunden ist.

3. Maschine gemäß einem der vorherigen Ansprüche,
**dadurch gekennzeichnet, dass** das Stoßdämpferelement (58) durch einen einzigen Draht gebildet ist, der spiralförmig gewickelt ist, wobei die Spulen (60) mittels der Montagehalter (62, 64) ortsfest verriegelt sind.

4. Maschine gemäß Anspruch 1, **dadurch gekennzeichnet, dass** der Draht eine Dicke zwischen 10 und 20 mm hat.

5. Maschine gemäß Anspruch 1, **dadurch gekennzeichnet, dass** jeder Montagehalter (62, 64) zwei Teile (66, 68, 70, 72) aufweist, die einander gegenüberliegen, wobei jedes Teil (66, 68; 70, 72) Sitze aufweist, die im Wesentlichen die Form eines Halbkreises für den Draht haben, wobei die Teile mittels Schrauben ortsfest verriegelt sind.

6. Maschine gemäß Anspruch 2, **dadurch gekennzeichnet, dass** zwischen der Basisstützen (22) und der Basis (40) entlang deren Abschnitten parallel zu der Drehachse der Trommel zumindest ein Metalldraht-Stoßdämpfer für jeden Abschnitt vorgesehen ist.

7. Maschine gemäß dem vorherigen Anspruch, **dadurch gekennzeichnet, dass** zwischen der Basisstütze (22) und der Basis (40) entlang deren Abschnitten parallel zu der Drehachse der Trommel zwei Metalldraht-Stoßdämpfer für jeden Abschnitt vorgesehen sind.

8. Maschine entweder gemäß Anspruch 6 oder 7, **dadurch gekennzeichnet, dass** die Montagehalter (62, 64) des Stoßdämpfers, die an den Abschnitten parallel zu der Drehachse der Trommel angeordnet sind, entlang einer Richtung angeordnet sein können, die hinsichtlich der Basisspitze (22) geneigt ist.

9. Maschine gemäß Anspruch 8, **dadurch gekennzeichnet, dass** der Montagehalter (64), der mit der Basisspitze (22) verbunden ist, an einer weiter äußeren Position ist als der Montagehalter (62), der mit der Basis (40) verbunden ist.

10. Maschine gemäß Anspruch 9, **dadurch gekennzeichnet, dass** eine Ebene (67), die durch die zwei Montagehalter (62, 64) des jeweiligen Metalldraht-Stoßdämpfers hindurchtritt, die an den Seitenabschnitten positioniert sind, zu der Drehachse der Trommel geneigt ist.

11. Maschine gemäß Anspruch 10, **dadurch gekennzeichnet, dass** die Neigung der Ebene (76), die durch die zwei Montagehalter (62, 64) des jeweiligen Metalldraht-Stoßdämpfers hindurchtritt, zu der Drehachse der Trommel in einem Winkel zwischen 0° und 45° geneigt ist.

12. Maschine gemäß einem der Ansprüche 8 bis 11, **dadurch gekennzeichnet, dass** die Längsachse (53) des jeweiligen Stoßdämpferelementes relativ zu einer Ebene geneigt ist, die senkrecht zu der Drehachse der Trommel steht, und zwar in einem Winkel zwischen 70° und 90°.

13. Maschine gemäß einem der Ansprüche 6 bis 12, **dadurch gekennzeichnet, dass** zumindest ein Metalldraht-Stoßdämpfer zwischen der Basisspitze (22) und der Basis (40) entlang deren Frontabschnitten senkrecht zu der Drehachse der Trommel angeordnet ist.

## Revendications

1. Machine à laver comprenant un bâti (14) et une unité de lavage (16), une unité d'entraînement (20) pour ladite unité de lavage (16), qui sont raccordées audit bâti au moyen d'un système de suspension (18),
**caractérisée en ce que** ledit système de suspension (18) comprend des amortisseurs à câble métallique (56) comprenant un élément d'amortisseur (58) comprenant à son tour au moins un câble enroulé afin de former au moins une spire (60) et des consoles de montage (62, 64).

2. Machine à laver selon la revendication 1, **caractérisée en ce qu'**elle comprend une structure de support (38) comprenant une base (40) sur laquelle l'unité de lavage (16) et l'unité d'entraînement (20) sont agencées, ledit bâti (14) comprenant un support de base, ladite base (40) étant raccordée audit support de base (22) au moyen du système de suspension (18).

3. Machine selon l'une quelconque des revendications précédentes, **caractérisée en ce que** l'élément d'amortisseur (58) est formé par un seul câble enroulé en spirale dans laquelle les spires (60) sont bloquées en position au moyen des consoles de montage (62, 64).

4. Machine selon la revendication 1, **caractérisée en ce que** le câble a une épaisseur comprise entre 10 et 20 mm.

5. Machine selon la revendication 1, **caractérisée en ce que** chaque console de montage (62, 64) comprend deux parties (66, 68, 70, 72) se faisant face, chaque partie (66, 68 ; 70, 72) comprenant des sièges ayant sensiblement la forme d'un demi-cercle pour ledit câble, lesdites parties étant bloquées en position au moyen de vis.

6. Machine selon la revendication 2, **caractérisée en ce que**, entre le support de base (22) et la base (40), le long de leurs parties parallèles à l'axe de rotation du tambour, on prévoit au moins un amortisseur à câble métallique pour chaque partie.

7. Machine selon la revendication précédente, **caractérisée en ce que**, entre le support de base (22) et la base (40), le long de leurs parties parallèles à l'axe de rotation du tambour, on prévoit deux amortisseurs à câble métallique pour chaque partie.

8. Machine selon l'une des revendications 6 ou 7, **caractérisée en ce que** les consoles de montage (62, 64) des amortisseurs agencés sur les parties parallèles à l'axe de rotation du tambour, peuvent être agencées le long d'une direction inclinée par rapport au support de base (22).

9. Machine selon la revendication 8, **caractérisée en ce que** la console de montage (64) raccordée au support de base (22) est dans une position plus externe que la console de montage (62) raccordée à la base (40).

10. Machine selon la revendication 9, **caractérisée en ce qu'**un plan (76) passant par les deux consoles de montage (62, 64) de chaque amortisseur à câble métallique positionné sur les parties latérales est incliné vers l'axe de rotation du tambour.

11. Machine selon la revendication 10, **caractérisée en ce que** l'inclinaison du plan (76) passant par les deux consoles de montage (62, 64) de chaque amortisseur à câble métallique est inclinée vers l'axe de rotation du tambour à un angle compris entre 0° et 45°.

12. Machine selon l'une quelconque des revendications 8 à 11, **caractérisée en ce que** l'axe longitudinal (53) de chaque élément d'amortisseur est incliné par rapport au plan perpendiculaire à l'axe de rotation du tambour à un angle compris entre 70° et 90°.

13. Machine selon l'une quelconque des revendications 6 à 12, **caractérisée en ce qu'**au moins un amortisseur à câble métallique est agencé entre le support de base (22) et la base (40) le long de leur partie avant perpendiculaire à l'axe de rotation du tambour.
